# NEUE EUROPÄISCHE PATENTSCHRIFT

(11) **EP 2 645 501 B2**
(45) Veröffentlichungstag und Bekanntmachung des Hinweises auf die Entscheidung über den Einspruch: **26.08.2020**
(45) Hinweis auf die Patenterteilung: 26.08.2015
(21) Anmeldenummer: 12161654.4
(22) Anmeldetag: 28.03.2012
(51) Int. Cl.: H02G 3/08, H02G 3/14

(54) **Systemanordnung aus einem Systemträger und mehreren Systemmodulen für die Gebäudeelektroinstallationstechnik und Türkommunikationstechnik**
System arrangement consisting of a system support piece and several system modules for electro-installation technology for buildings and door communication technology
Ensemble de système constitué d'un support de système et de plusieurs modules de système pour la technique d'installation électrique d'un bâtiment et la technique de communication de porte

(43) Veröffentlichungstag der Anmeldung: 02.10.2013
(73) Patentinhaber: Gira Giersiepen GmbH & Co. KG, 42477 Radevormwald (DE)
(72) Erfinder: Schieffer, Klaus, 51375 Leverkusen (DE)
(74) Vertreter: Patent- und Rechtsanwälte Dr. Solf & Zapf

(56) Entgegenhaltungen:
- EP-A1- 0 452 658
- EP-A1- 2 107 767
- EP-A2- 2 043 123
- EP-B1- 2 059 985
- EP-B1- 2 107 778
- WO-A1-2008/023102
- DE-A1-102006 040 686
- DE-A1-102007 052 943
- DE-A1-102010 016 345
- DE-A1-102010 016 345
- US-A- 4 584 436
- US-A- 4 851 811
- US-B1- 7 323 638

## Beschreibung

Die vorliegende Erfindung betrifft eine Systemanordnung aus einem Systemträger und mehreren Systemmodulen für die Gebäude-Elektroinstallations- und Türkommunikationstechnik, wobei die Systemmodule aus einem Modulunterteil und einem mit diesem lösbar verbundenen Funktionsoberteil bestehen, wobei das Modulunterteil zum Befestigen an dem Systemträger dient, wobei das Modulunterteil ein quaderförmiges Bodenteil aufweist, in dem ein Schaltungsträger mit seiner elektronischen Schaltung aufgenommen ist, wobei der Schaltungsträger einseitig zwei Mehrfachkontakte für einen Anschluss einer Busleitung aufweist und die Mehrfachkontakte derart elektrisch belegt sind, dass sie sowohl Eingangskontaktstellen als auch Ausgangskontaktstellen für eine elektrische Signalverarbeitung und eine Spannungsversorgung bilden, und wobei die Mehrfachkontakte über Öffnungen im Bodenteil zugänglich sind.

Bei den bekannten Systemmodulen, wie elektrischen Schaltern, Klingeltastern, Lautsprecher- oder Kameramodulen, sind das Modulunterteil und das Funktionsoberteil derart ausgebildet, dass das Modulunterteil an das Funktionsoberteil angepasst ist, weshalb die verwendeten Modulunterteile nicht einheitlich sind. Zudem handelt es sich hierbei um Systemmodule, bei denen ein äußerer Abdeckrahmen verwendet wird, der in Abhängigkeit von der Anzahl der Module in seiner Größe variiert. Auch ist es bekannt, insbesondere metallische Oberflächen für modulare Systeme zu bilden, indem diese durch einstückige, insbesondere metallische Frontplatten abgedeckt werden oder wobei die einzelnen Systemmodule durch Öffnungen der Frontplatten hindurchgesteckt werden, so dass die Modulrahmen auf der einstückigen Frontplatte aufliegen.

Bei den bekannten Systemen ist die Verdrahtung der einzelnen Systemmodule montageaufwändig, da der Monteur vor Ort jeweils die erforderlichen Anschlussleitungen konfektionieren muss oder er verwendet vom Hersteller vorkonfektionierte Kabel, wobei für jede Modulverbindung ein speziell angepasstes Kabel erforderlich ist. Dies ist jedoch zeit- und kostenaufwändig und zudem ergibt sich hieraus ein erhöhter Platzbedarf für die Unterbringung der Anschlussleitungen.

Der vorliegenden Erfindung liegt die Aufgabe zu Grunde, eine Systemanordnung der eingangs beschriebenen Art derart zu verbessern, dass eine platzsparende Modulbauweise erreicht wird, und eine Trennung von Modulunterteil und Funktionsoberteil derart gegeben ist, dass einheitliche Modulunterteile verwendbar sind. Zudem soll eine platzsparende und kostengünstige Anschlusstechnik möglich sein und es soll eine rahmenlose, flächenbündige Oberfläche im montierten Zustand der Systemmodule erreicht werden.

Erfindungsgemäß wird dies dadurch erreicht, dass ein vorstehender Bodenansatz des Bodenteils eine quadratische Form besitzt und seine Bodenfläche derart bemessen ist, dass sie in sechzehn gleich große quadratische Teilflächen unterteilt werden kann, wobei die Seitenkantenfläche jeder Teilfläche einem modulspezifischen Rastermaß entspricht und der Systemträger aus einem Systemrahmen besteht, in dem mehrere quadratische, gleich große Rahmenöffnungen in Reihe liegend ausgebildet sind, deren Mittenabstand dem sechsfachen Rastermaß und deren Seitenlänge dem vierfachen Rastermaß entspricht, wobei der Systemträger einen umfänglichen Randabschnitt an jeder Rahmenöffnung als Anlagebereich aufweist.

Durch die erfindungsgemäße Ausführung werden die Design- und Bedienoberflächen von den Funktionen getrennt, so dass sich eine Oberflächenvielfalt mit Verwendung derselben Modulunterteile ergibt. Zudem ergibt sich eine integrierte Bus-Anschlusstechnik. Zudem wird somit im Systemträger eine rahmenlose flächenbündige Montage der erfindungsgemäßen Systemmodule ermöglicht, da eine erfindungsgemäße Systemmodulanordnung aus einem Systemrahmenteil besteht, in dem mehrere quadratische, gleich große Rahmenöffnungen in einer Reihe liegend ausgebildet sind, deren Mittenabstand dem sechsfachen Rastermaß und deren Seitenlänge dem vierfachen Rastermaß entspricht.

Erfindungsgemäß ist es weiterhin vorteilhaft, wenn die Öffnungen innerhalb sich rechtwinklig kreuzender Leitungskanäle zur Aufnahme der Busleitungen im Bodenteil befinden, wobei die Mehrfachkontakte vorzugsweise als Reihenkontakte ausgebildet sind und senkrecht zu mittleren Längsachsen der Leitungskanäle verlaufen. Hierbei besitzt mindestens einer der Leitungskanäle eine Tiefe, die einer zweifachen Dicke der als Stegleitungen ausgebildeten Busleitungen beträgt. Die an den Busleitungen vorgesehenen Gegenkontakte sind vorzugsweise als Schneid-Klemmkontakte ausgebildet, so dass sich eine einfache Anschlusstechnik ergibt.

Weiterhin ist es erfindungsgemäß zweckmäßig, wenn das Bodenteil eine an seinem Randbereich ausgebildete, umlaufende Anlagefläche für den Systemträger aufweist, wobei zweckmäßigerweise die Leitungskanäle in einem gegenüber dem die Anlagefläche bildenden Randbereich unter Ausbildung einer Stufe vorstehenden Bodenansatz ausgebildet sind. Das erfindungsgemäße modulspezifische Rastermaß beträgt vorzugsweise 17,75 mm. Hierauf ergibt sich ein Stichmaß für den Bodenansatz von 71 mm. Aus dieser erfindungsgemäßen Ausgestaltung ergibt sich die Möglichkeit, die Gegenkontakte der elektrischen Busleitung ebenfalls in einem festen, diesem Rastermaß angepassten Maß vorzukonfektionieren, so dass die erfindungsgemäß verwendete Busleitung beispielsweise bereits als Rollenware mit den jeweiligen Schneid-Klemmkontakten versehen hergestellt werden kann, so dass vor Ort der Monteur nur noch entsprechend der Anzahl der verwendeten Systemmodule eine Ablängung der vorkonfektionierten Busleitung vornehmen muss. Hierbei ergibt sich durch die erfindungsgemäße Ausgestaltung auch eine besonders platzsparende Unterbringung der Busleitung im Bereich der Bodenplatte.

Weiterhin ist es erfindungsgemäß vorteilhaft, wenn der die Anlagefläche bildende Randbereich eine Breite besitzt, die mindestens dem halben erfindungsgemäßen Rastermaß, insbesondere 8,875 mm entspricht und das Modulunterteil einen umfangsgemäßen angeformten Rahmenabschnitt aufweist, der gegenüber dem quaderförmigen Bodenteil allseitig um dasselbe Überstandsmaß C übersteht, wobei dieses Überstandsmaß C und die Breite B des Randbereichs der Anlagefläche derart ausgebildet sind, dass die Summe aus beiden Maßen dem erfindungsgemäßen Rastermaß, insbesondere 17,75 mm entspricht.

Vorteilhafte Ausführungen der Erfindung sind in den Unteransprüchen enthalten und werden an Hand der in den beiliegenden Zeichnungen dargestellten Ausführungsbeispiele näher erläutert. Es zeigen:
- Fig. 1: eine Explosionsdarstellung eines Funktionsmoduls für eine erfindungsgemäße Systemanordnung im nicht zusammengesetzten Zustand,
- Fig. 2: eine Rückansicht eines Funktionsmoduls gemäß Fig. 1 für eine erfindungsgemäße Systemanordnung,
- Fig. 3: eine Seitenansicht des Funktionsmoduls gemäß Fig. 2,
- Fig. 4: eine Rückansicht auf eine erfindungsgemäße Systemanordnung,
- Fig. 5: eine weitere Ausführung einer erfindungsgemäßen Systemanordnung in Rückansicht im zusammengesetzten Zustand,
- Fig. 6: einen Schnitt durch eine erfindungsgemäße Systemanordnung montiert in einem Unterputzgehäuse,
- Fig. 7: einen Schnitt durch eine erfindungsgemäße Systemanordnung montiert in einem Aufputzgehäuse,
- Fig. 8: einen Schnitt durch eine erfindungsgemäße Systemanordnung montiert in einem freistehenden Gehäuse,
- Fig. 9: eine perspektivische Ansicht eines Systemträgers für eine erfindungsgemäße Systemanordnung mit einem Riegelverschluss mit einem Unterputzgehäuse und
- Fig. 10: eine Teilansicht aus Fig. 9 in vergrößerter Darstellung.

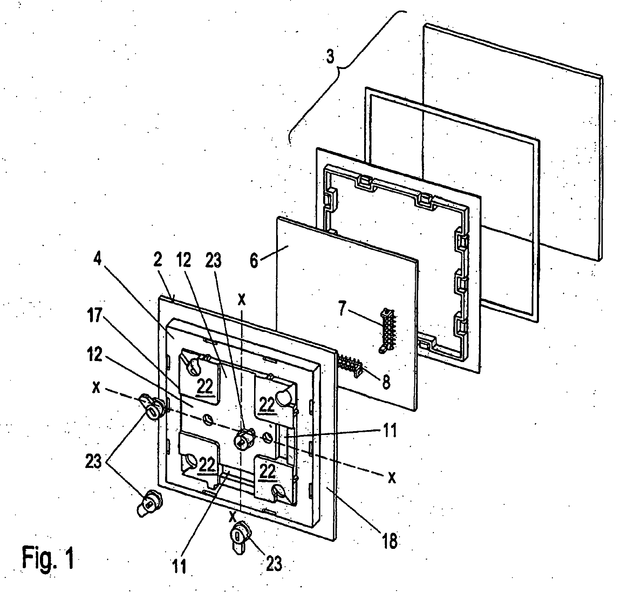

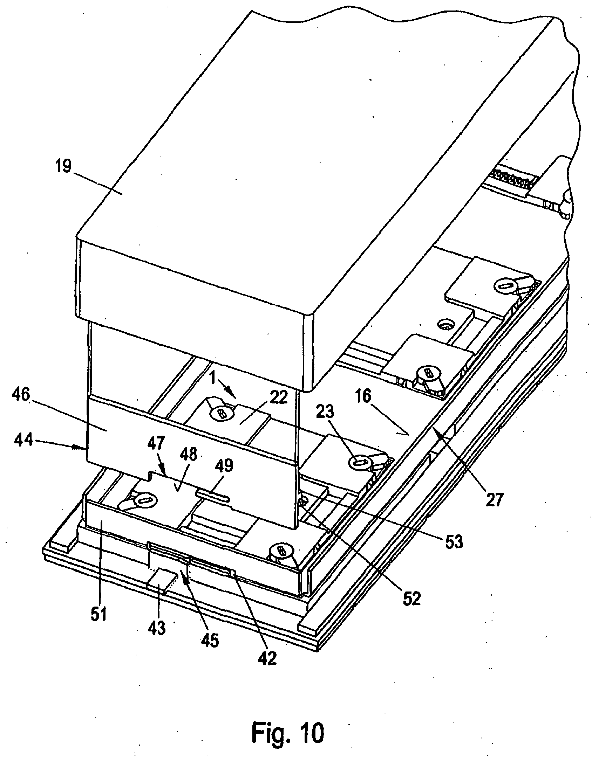

In den Fig. 1 bis 10 sind gleiche Teile bzw. funktionsgleiche Teile mit denselben Bezugszeichen gekennzeichnet. Sofern bestimmte beschriebene und/oder aus den Zeichnungen entnehmbare Merkmale der erfindungsgemäßen Systemanordnung oder seiner Bestandteile nur im Zusammenhang mit einem Ausführungsbeispiel beschrieben sind, sind diese aber auch gemäß der Erfindung unabhängig von diesem Ausführungsbeispiel als Einzelmerkmal oder aber auch in Kombination mit anderen Merkmalen der einzelnen Ausführungsbeispiele wesentlich und werden als zur Erfindung gehörig beansprucht.

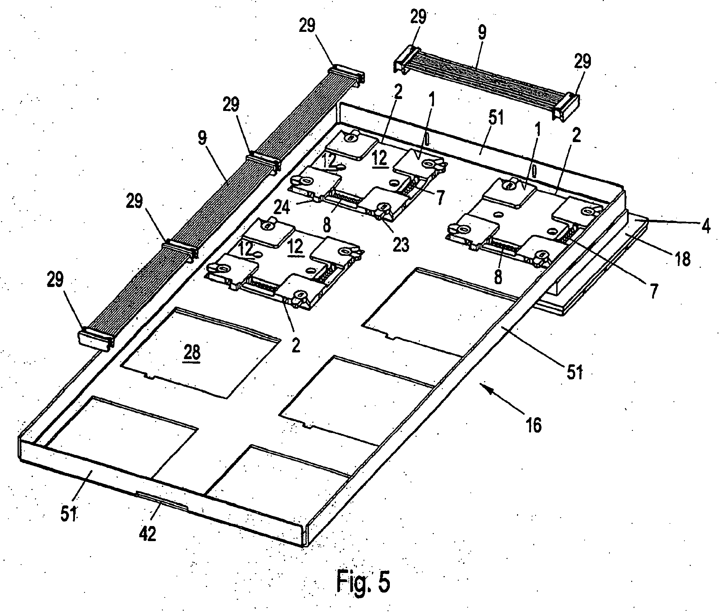

Ein Systemmodul 1 besteht aus einem Modulunterteil 2 und einem mit diesem lösbar, z. B. über eine Rastverbindung verbindbaren Funktionsoberteil 3. Das Modulunterteil 2 besteht aus einem quaderförmigen Bodenteil 4, in dem ein Schaltungsträger 6 mit seiner elektronischen Schaltung aufgenommen wird. Auf der dem Modulunterteil 2 gegenüberliegenden Seite des Schaltungsträgers 6 wird dieser von dem Funktionsoberteil 3 abgedeckt, so dass der Schaltungsträger 6 zwischen dem Modulunterteil 2 und dem Funktionsoberteil 3 eingeschlossen ist. Der Schaltungsträger 6 weist einseitig zwei Mehrfachkontakte 7, 8 auf. Diese Mehrfachkontakte 7, 8 dienen zum Anschluss einer Busleitung 9, siehe Fig. 5. Die Mehrfachkontakte 7, 8 sind derart elektrisch belegt, dass diese sowohl Eingangskontaktstellen als auch Ausgangskontaktstellen für eine elektrische Signalverarbeitung und eine elektrische Spannungsversorgung bilden, und wobei die Mehrfachkontakte 7, 8 über Öffnungen 11 im Bodenteil 4 zugänglich sind. Das Modulunterteil 2 ist vorteilhafterweise als Kunststoffspritzgussteil ausgebildet. Bei dem Schaltungsträger 6 handelt es sich um eine an sich bekannte Leitungsplatine, auf der die erforderlichen elektronischen Bauteile befestigt sind.

Die Öffnungen 11 sind innerhalb sich rechtwinklig kreuzender Leitungskanäle 12 zur Aufnahme der Busleitungen 9 angeordnet. Die Mehrfachkontakte 7, 8 sind vorzugsweise als Reihenkontakte ausgebildet und sind derart ausgerichtet, dass sie senkrecht zu einer mittleren Längsachse X-X der Leitungskanäle 12 verlaufen. Hierbei entspricht zweckmäßigerweise die Längserstreckung der Mehrfachkontakte 7, 8 der Breite der Leitungskanäle 12. Weiterhin ist es zweckmäßig, wenn mindestens einer der Leitungskanäle eine Tiefe besitzt, die einer zweifachen Dicke der als Stegleitungen ausgebildeten Busleitungen 9, 10 entspricht. Vorteilhafterweise weisen beide Leitungskanäle 12 eine derartige Tiefe auf. Hierdurch wird erreicht, dass die Leitungskanäle 12 die Busleitung 9 vollständig aufnehmen und diese vollständige Aufnahme auch bei einer kreuzenden Anordnung der Busleitungen 9 vorhanden ist, so dass die Busleitungen 9 nicht über das Modulunterteil 2 vorragen. Hierdurch wird eine flache Konstruktionshöhe des verschalteten Systemmoduls 1 bewirkt.

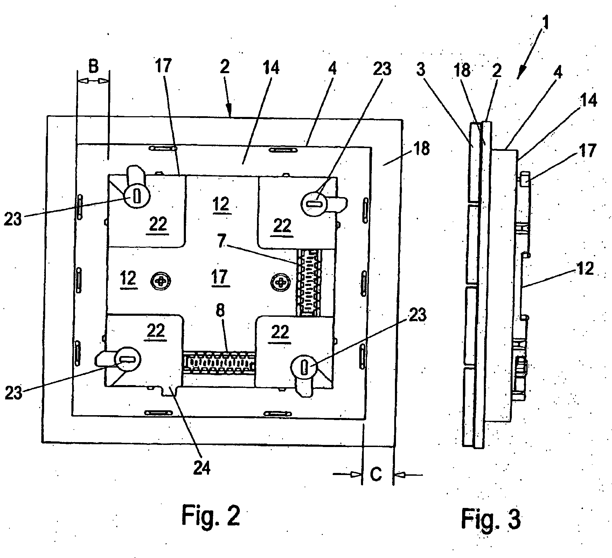

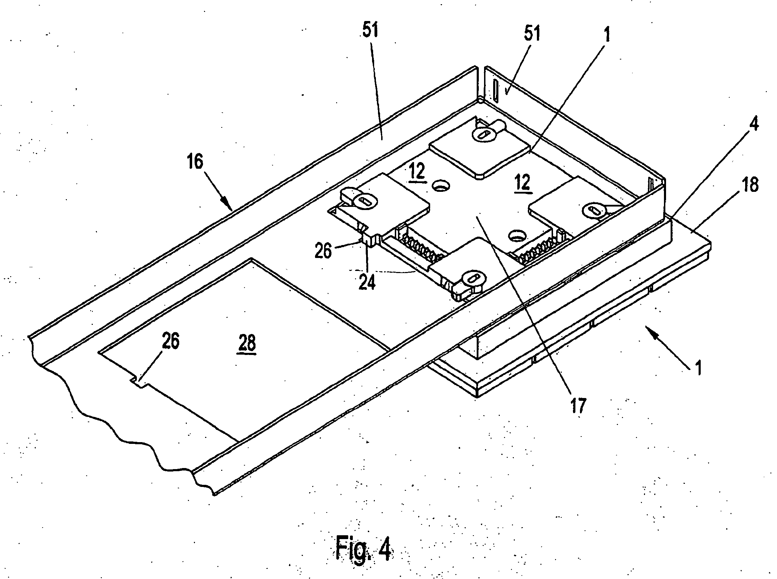

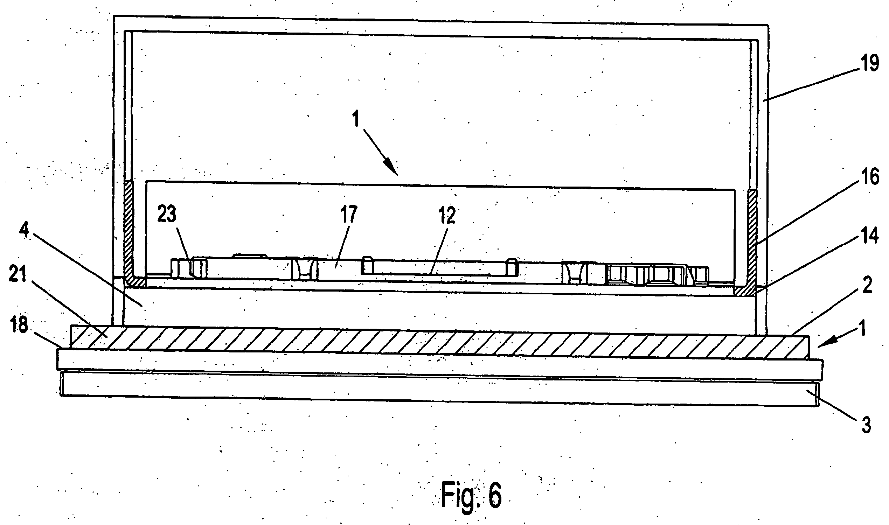

Das Bodenteil 4 weist eine an seinem Randbereich ausgebildete, umlaufende Anlagefläche 14 für einen Systemträger 16 auf, wozu auf Fig. 4 und 5 verwiesen wird. Hierbei handelt es sich um einen Systemträger 16 z. B. für die Unterputzmontage der Systemmodule 1. Diese Systemträger 16 werden z. B. in einem Unterputzgehäuse befestigt. Auf Grund der Ausgestaltung des Modulunterteils 2 mit den hierin integrierten Busleitungen 9 ergibt sich eine geringe Konstruktionshöhe des Modulunterteils 2, so dass auch das den Systemträger 16 aufnehmende Gehäuse flach ausgeführt werden kann. Die Leitungskanäle 12 sind in einem gegenüber dem die Anlagefläche 14 bildenden Randbereich unter Ausbildung einer Stufe innerhalb eines vorstehenden Bodenansatzes 17 ausgebildet. Zweckmäßigerweise ist die Stufenhöhe des Bodenansatzes 17 größer/gleich einer Materialdicke des an der Anlagefläche 14 anliegenden Systemträgers 16. Der Bodenansatz 17 besitzt eine quadratische Form und seine Bodenfläche ist derart bemessen, dass sie insbesondere in sechzehn gleich große quadratische Teilflächen unterteilt werden kann, wobei die Teilflächen eine Seitenkantenlänge entsprechend einem modulspezifischen Rastermaß besitzen. Vorteilhafterweise beträgt dieses modulspezifische Rastermaß 17,75 mm, woraus sich ein Stichmaß für den vorstehenden Bodenansatz 17 von 71 mm ergibt. Der die Anlagefläche 14 bildende Randbereich besitzt zweckmäßigerweise eine Breite B, die mindestens dem halben Rastermaß, insbesondere 8,875 mm beträgt. Weiterhin ist zweckmäßigerweise vorgesehen, dass das Modulunterteil 2 einen umfangsgemäßen Rahmenabschnitt 18 aufweist, der gegenüber dem quaderförmigen Bodenteil 4 allseitig um ein einheitliches Überstandsmaß C übersteht. Durch die erfindungsgemäße Dimensionierung ergibt sich, dass das gesamte Systemmodul 1 ebenfalls entsprechend der Ausbildung des quadratischen Bodenansatzes 17 ebenfalls quadratisch ist. Weiterhin ist es zweckmäßig, wenn die Summe aus dem Überstandsmaß C und der Breite B der Anlagefläche 14 dem Rastermaß entspricht und insbesondere 17,75 mm beträgt. In Fig. 6 ist dargestellt, wie ein Systemmodul 1, das in dem Systemträger 16 befestigt ist, mit dem Systemträger 16 in einen Unterputzgehäuse 19 angeordnet ist. Hierbei ist zu erkennen, dass einerseits der Systemträger 16 an der Anlagefläche 14 anliegt und andererseits das Systemmodul 1 mit dem Rahmenabschnitt 18 das Unterputzgehäuse 19 überragt, so dass durch eine Schattenfuge zwischen dem Ende des Unterputzgehäuses 19 und dem Systemmodul 1 erreicht wird. Zusätzlich ist zu erkennen, dass noch eine Dichtung 21 zwischen dem Unterputzgehäuse 19 und dem Rahmenabschnitt18 angeordnet sein kann. Zur Befestigung des Systemmoduls 1 innerhalb des Systemträgers 16 weist der Bodenansatz 17 in seinen Eckbereichen 22 derart schwenkbar gelagerte Fixierschieber 23 auf, dass diese in ihren Öffnungsstellung innerhalb der Umrisskontur des Bodenansatzes 17 liegen und in ihrer Fixierstellung, siehe Fig. 2, die Umrisskontur des Bodenansatzes 17 einendig überragen und den Systemträger 16 hintergreifen können. Wie aus Fig. 2 zu erkennen ist, weist ein Systemmodul 1 zweckmäßigerweise an einer festgelegten Stelle einer Seitenkante des Bodenansatzes 17 einen gegenüber dessen Umrisskontur vorstehenden Kodierfortsatz 24 auf. Bei jedem Systemmodul 1 befindet sich dieser Kodierfortsatz 24 an derselben Stelle. Dieser Kodierfortsatz 24 greift im montierten Zustand des Systemmoduls 1 im Systemträger 16 in eine Kodierausnehmung 26 des Systemträgers 16 ein. Wie insbesondere den Fig. 4 und 5 zu entnehmen ist, wird aus mehreren Systemmodulen 1 in Verbindung mit dem Systemträger 16 eine erfindungsgemäße Systemordnung geschaffen, wobei der Systemträger 16 aus einem Systemrahmen 27 besteht, in dem mehrere quadratische, gleich große Rahmenöffnungen 28 ausgebildet sind. Diese Rahmenöffnungen 28 werden zweckmäßigerweise in einem Laserschneidverfahren insbesondere aus einem aus Edelstahlblech hergestellten Systemträger 16 ausgeschnitten. Hierdurch ergibt sich eine maßlich sehr genaue Ausführung des erfindungsgemäßen Systemträgers 16, wobei eventuelle Toleranzen derart ausgeglichen werden können, dass sie praktisch vollständig kompensiert werden können. Diese Rahmenöffnungen 28 können bei einer Ausführungsform eines erfindungsgemäßen Systemträgers 16 einspaltig hintereinanderliegend ausgebildet sein, wozu beispielsweise auf Fig. 4 verwiesen wird. Ebenfalls kann es zweckmäßig sein, die Rahmenöffnungen 28 in senkrecht zueinander verlaufenden Reihen und Spalten anzuordnen, wie dies beispielsweise in Fig. 5 dargestellt ist. Der Mittenabstand der Rahmenöffnungen 28 beträgt erfindungsgemäß jeweils das sechsfache Rastermaß und die Seitenlänge der Rahmenöffnungen 28 beträgt erfindungsgemäß jeweils das vierfache Rastermaß. Durch diese Ausbildung der Rahmenöffnungen 28 ergibt sich eine flächenbündige Anordnung der Systemmodule 1 innerhalb des Systemträgers 16, d. h. dass die Systemmodule 1 im montierten Zustand mit ihren Rahmenabschnitten 18 aneinanderliegend montiert sind, wobei ihre Oberflächen in derselben Ebene verlaufen.

Wie insbesondere aus den Fig. 4 und 5 zu erkennen ist, befinden sich die Kodierausnehmungen 26 jeweils immer an derselben Stelle im Randbereich der Rahmenöffnungen 28, so dass eine stets lagerichtige Ausrichtung der Systemmodule 1 im Systemträger 16 gewährleistet ist, d. h. die Systemmodule 1 haben im Systemträger 16 jeweils dieselbe Ausrichtung, was insbesondere in Bezug auf die Lage der Mehrfachkontakte 7, 8 wesentlich ist. Wie in den Fig. 3 und 4 zu erkennen ist, werden die Mehrfachkontakte 7 bzw. die Mehrfachkontakte 8 der jeweiligen Systemmodule 1 miteinander durch eine Busleitung 9, die als Stegleitung ausgebildet ist, verbunden, indem an der Busleitung 9 zu den Mehrfachkontakten 7 passende Mehrfachgegenkontakte 29 befestigt sind. Hierbei handelt es sich zweckmäßigerweise um Schneid-Klemmkontakte, die an der Busleitung 9 mit einem derartigen gegenseitigen Abstand befestigt sind, dass ihr Abstand insbesondere dem sechsfachen Rastermaß entspricht, was vorzugsweise im vorliegenden Fall 106,5 mm beträgt. Denn der Abstand der Mehrfachkontakte 7 zueinander und der Abstand der Mehrfachkontakte 8 zueinander entsprechen ebenfalls diesem Rastermaß. Demnach ist es erfindungsgemäß möglich, die Busleitungen 9 endlos vorzukonfektionieren und mit den jeweiligen Gegenkontakten 29 zu versehen und bei der Montage der Systemmodule 1 im Systemträger 16 kann die jeweilig benötigte Länge der Busleitungen 9 von der beispielsweise auf einer Rolle aufgewickelten Busleitung 9 abgeschnitten werden, und zwar entsprechend der Anzahl der benötigten Gegenkontakte 29, die der Anzahl der in einer Reihe bzw. einer Spalte liegenden Systemmodule 1 entspricht. Es ist nur noch eine Schnittstelle pro Systemmodul 1 in Reihen- bzw. Spaltenrichtung vorhanden und es ist nur eine durchgehende Busleitung 9 pro Reihe bzw. Spalte erforderlich. Hierdurch ergibt sich ein deutlicher Montagevorteil bei dem Systemmodul 1. In diesem Zusammenhang ist darauf zu verweisen, dass die Mehrfachkontakte 7, 8, die als Reihenkontakte ausgebildet sein, in Bezug auf ihre elektrische Belegung zueinander vorzugsweise um 90 ° drehsymmetrisch angeordnet sind.

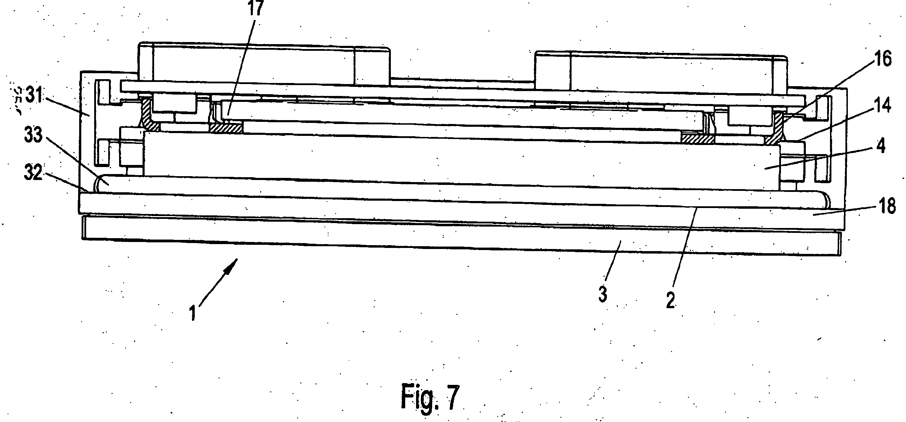

In Fig. 7 ist dargestellt, wie ein Systemträger 16 für eine erfindungsgemäße Systemanordnung mit in ihm befestigten Systemmodulen 1 innerhalb eines Aufputzgehäuses 31 angeordnet ist. Bei dieser Montageart ergibt sich, dass das Aufputzgehäuse 31 mit seinem Umfangsrand 32 an der dem Aufputzgehäuse 31 zugekehrten Seite des Rahmenabschnittes 18 bündig anliegt. Dabei ist eine Gehäusedichtung 33 innerhalb einer Nut im Umfangsrand 32 des Aufputzgehäuses 31 angeordnet. Insofern entspricht die Breite des Aufputzgehäuses 31 dem sechsfachen Rastermaß und beträgt insbesondere 106,5 mm. Ein derartiges Aufputzgehäuse 31 ist dann für die einreihige Anordnung Systemmodule 1 geeignet. Für den Fall, dass eine mehrreihige Anordnung der Systemmodule 1 in einem Aufputzgehäuse 31 erforderlich ist, beträgt die Breite des Aufputzgehäuses 31 jeweils entsprechend der Anzahl der nebeneinanderliegenden Reihen dem mehrfachen sechsfachen Rastermaß.

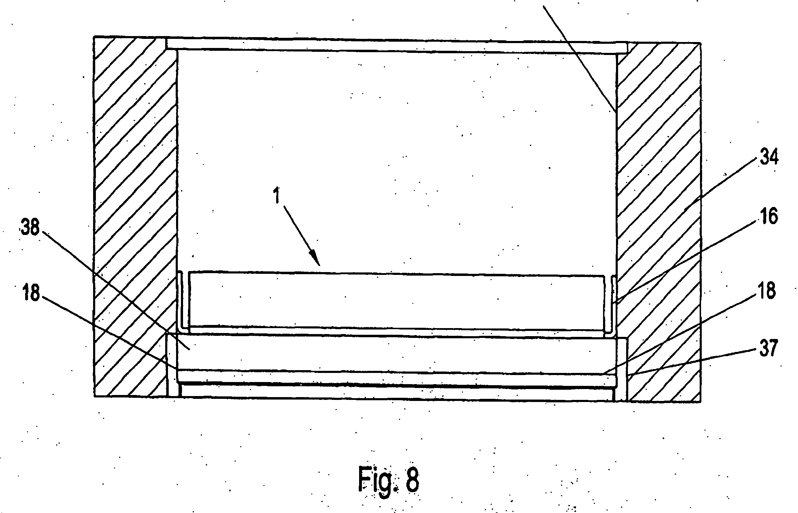

In Fig. 8 ist die Montage einer erfindungsgemäßen Systemanordnung in einem freistehenden Gehäuse 34 dargestellt. Dieses freistehende Gehäuse 34 besitzt zwei hintereinanderliegende Öffnungsabschnitte 36, 37. Hierbei besitzt der Öffnungsabschnitt 36 eine Breite, die der Breite eines Systemträgers 16 für eine erfindungsgemäße Systemanordnung entspricht, und der Öffnungsabschnitt 37 besitzt eine Breite, die der Breite eines Funktionsmoduls zusammen mit einer vorhandenen Fuge angepasst ist, so dass dieses Funktionsmodul innerhalb des Öffnungsabschnitts 37 angeordnet werden kann.

In dieser Ausführungsform ist der Systemträger 16 derart dimensioniert, dass er mit seiner Anlagefläche 14 an der dem Systemträger 16 zugekehrten Unterseite des Rahmenabschnittes 18 anliegt. Gleichzeitig sitzt der Systemträger 16 innerhalb des Öffnungsabschnittes 36, wobei zwischen dem Systemträger 16 und der Unterseite des Rahmenabschnittes 18 eine Gehäusedichtung 38 angeordnet ist.

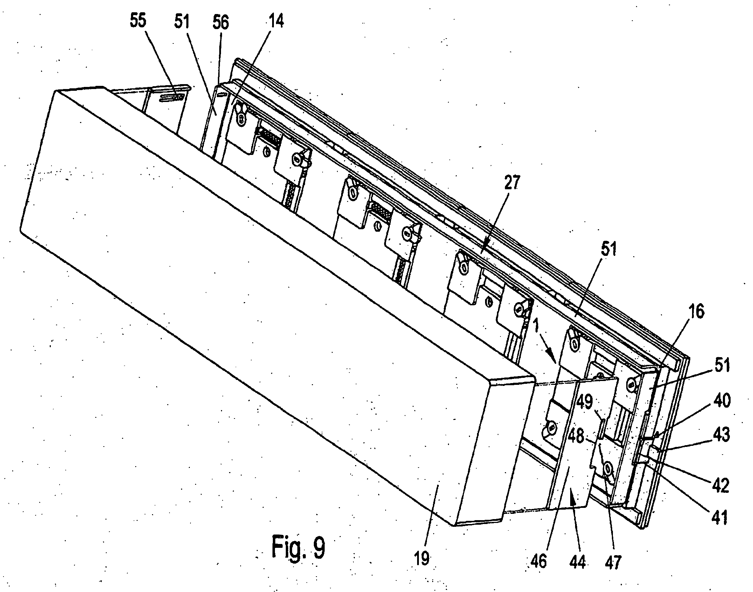

Wie aus Fig. 9 ersichtlich ist, ist es zweckmäßig, wenn der Systemträger 16 an einer Seite seines Systemrahmens 27 einen Verschlussriegel 40 aufweist, mit dem der Systemträger 16 beispielsweise in einem Aufnahmegehäuse derart angeordnet werden kann, dass er mittels des Verschlussriegels 40 in dem Aufnahmegehäuse, z. B. einem Unterputzgehäuse 19 mittels einer Formschlussverbindung mit einem Verschlussgegenstück 44 im Aufnahmegehäuse durch Verschiebung lösbar fixierbar ist. Dieser Verschlussriegel 40 ist auf der Anlagefläche 14 des Systemrahmens 27 mittels eines Lagerstegs 41 verschiebbar befestigt und durchgreift mit diesem einen Führungsschlitz 42 im Systemträger 16 und weist einen äußeren, parallel zum Bodenteil 4 verlaufenden Haltefortsatz 45 auf, an dem ein parallel zum Rahmenabschnitt 18 verlaufender Betätigungsfortsatz 43 angeformt ist. Dieser kann mittels eines Werkzeuges betätigt werden. Das Verschlussgegenstück 44 besteht aus einem im Unterputzgehäuse 19 angeordneten Verschlussblech 46, das eine teilweise randseitig offene Schlitzöffnung 47 aufweist. Im in das Unterputzgehäuse 19 eingesetzten Zustand des Systemrahmens 27 liegen die Schlitzöffnung 47 und der Führungsschlitz 42 deckungsgleich derart nebeneinander bzw. übereinander, dass der Lagersteg 41 durch die Schlitzöffnung 47 verläuft. Im entriegelten Zustand verläuft der Lagersteg 41 durch den randoffenen Öffnungsabschnitt 48 der Schlitzöffnung 47, und in die Verriegelungsstellung wird der Verschlussriegel 40 mit seinem Lagersteg 41 in den randseitig geschlossenen Abschnitt 49 der Schlitzöffnung 47 verschoben. Im eingesetzten Zustand des Systemrahmens 27 taucht dieser mit seinem zur Anlagefläche 14 senkrecht verlaufenden, abgebogenen Rahmenschenkel 51 in eine Haltenut 52 ein, die zwischen dem Verschlussblech 46 und einem Führungselement 53 am Verschlussblech 46 ausgebildet ist. Dem Verschlussblech 46 gegenüberliegend ist zweckmäßigerweise ein plattenförmiges Verschlussprofil 54 z. B. im Unterputzgehäuse 19 angeordnet, das zwei jeweils endseitige Federrastungen 55 aufweist, die im eingesetzten Zustand des Systemträgers 16 in endseitige Rastschlitze 56 im zugehörigen Rahmenschenkel 51 einrasten.

## Patentansprüche

1. Systemanordnung aus einem Systemträger (16) und mehreren Systemmodulen (1) für die Gebäudeelektroinstallation und Türkommunikation, wobei die Systemmodule (1) aus einem Modulunterteil (2) und einem mit diesem lösbar verbundenen Funktionsoberteil (3) bestehen, wobei das Modulunterteil (2) zum Befestigen an dem Systemträger (16) dient, wobei das Modulunterteil (2) ein quaderförmiges Bodenteil (4) aufweist, in dem ein Schaltungsträger (6) mit seiner elektronischen Schaltung aufgenommen ist, wobei der Schaltungsträger (6) einseitig zwei Mehrfachkontakte (7, 8) für einen Anschluss einer Busleitung (9) aufweist und die Mehrfachkontakte (7, 8) derart elektrisch belegt sind, dass sie sowohl Eingangskontaktstellen als auch Ausgangskontaktstellen für eine elektrische Signalverarbeitung und eine Spannungsversorgung bilden, und wobei die Mehrfachkontakte (7, 8) über Öffnungen (11) im Bodenteil (4) zugänglich sind,
**dadurch gekennzeichnet, dass** ein vorstehender Bodenansatz (17) des Bodenteils (4) eine quadratische Form besitzt und seine Bodenfläche derart bemessen ist, dass sie in sechzehn gleich große quadratische Teilflächen unterteilt werden kann, wobei die Seitenkantenfläche jeder Teilfläche einem modulspezifischen Rastermaß entspricht und der Systemträger (16) aus einem Systemrahmen (27) besteht, in dem mehrere quadratische, gleich große Rahmenöffnungen (28) in Reihe liegend ausgebildet sind, deren Mittenabstand dem sechsfachen Rastermaß und deren Seitenlänge dem vierfachen Rastermaß entspricht, wobei der Systemträger (16) einen umfänglichen Randabschnitt an jeder Rahmenöffnung (28) als Anlagebereich aufweist.

2. Systemanordnung nach Anspruch 1,
**dadurch gekennzeichnet, dass** die Öffnungen (11) innerhalb sich rechtwinklig kreuzender Leitungskanäle (12) zur Aufnahme der Busleitungen (9) angeordnet sind und die Mehrfachkontakte (7, 8) vorzugsweise als Reihenkontakte ausgebildet sind und senkrecht zur mittleren Längsachse (X-X) der Leitungskanäle (12) ausgerichtet sind.

3. Systemanordnung nach Anspruch 1 oder 2,
**dadurch gekennzeichnet, dass** mindestens einer der Leitungskanäle (12) eine Tiefe besitzt, die einer zweifachen Dicke der als Stegleitung ausgebildeten Busleitung (9) entspricht.

4. Systemanordnung nach einem der Ansprüche 1 bis 3,
**dadurch gekennzeichnet, dass** das Bodenteil (4) eine an seinem Randbereich ausgebildete, umlaufende Anlagefläche (14) für den Systemträger (16) aufweist.

5. Systemanordnung nach einem der Ansprüche 1 bis 4,
**dadurch gekennzeichnet, dass** die Leitungskanäle (12) in einem gegenüber dem die Anlagefläche (14) bildenden Randbereich unter Ausbildung einer Stufe vorstehenden Bodenansatz (17) ausgebildet sind.

6. Systemanordnung nach Anspruch 5,
**dadurch gekennzeichnet, dass** die Stufenhöhe des Bodenansatzes (17) größer/gleich einer Materialdicke des an der Anlagefläche (14) anliegenden Systemträgers (16) ist.

7. Systemanordnung nach einem der Ansprüche 1 bis 6,
**dadurch gekennzeichnet, dass** die Seitenkantenlänge der Teilflächen bzw. das Rastermaß 17,75 mm beträgt.

8. Systemanordnung nach einem der Ansprüche 1 bis 7,
**dadurch gekennzeichnet, dass** die Breite (B) der Anlagefläche (14) mindestens dem halben Rastermaß, insbesondere 8,875 mm entspricht.

9. Systemanordnung nach einem der Ansprüche 1 bis 8,
**dadurch gekennzeichnet, dass** das Modulunterteil (2) einen umfangsgemäßen Rahmenabschnitt (18) aufweist, der gegenüber dem quaderförmigen Bodenteil (4) allseitig um ein einheitliches Überstandsmaß (C) übersteht.

10. Systemanordnung nach Anspruch 9,
**dadurch gekennzeichnet, dass** die Summe aus dem Überstandsmaß (C) und der Breite (B) des Randbereichs bzw. der Anlagefläche (14) dem Rastermaß, insbesondere 17,75 mm entspricht.

11. Systemanordnung nach einem der Ansprüche 2 bis 10,
**dadurch gekennzeichnet, dass** die als Reihenkontakte ausgebildeten Mehrfachkontakte (7, 8) in Bezug auf ihre elektrische Belegung zueinander um 90° drehsymmetrisch angeordnet sind.

12. Systemanordnung nach einem der Ansprüche 1 bis 11,
**dadurch gekennzeichnet, dass** der Bodenansatz (17) in seinen Eckbereichen derart schwenkbar gelagerte Fixierschieber (23) aufweist, dass diese in ihrer Öffnungsstellung innerhalb einer Umrisskontur des Bodenansatzes (17) liegen und in ihrer Fixierstellung die Umrisskontur des Bodenansatzes (17) einendig überragen.

13. Systemanordnung nach einem der Ansprüche 1 bis 12,
**dadurch gekennzeichnet, dass** an einer festgelegten Seitenkante des Bodenansatzes (17) ein gegenüber dieser vorstehender Kodieransatz (24) ausgebildet ist, der in eine Kodierausnehmung (26) im Systemträger (16) im montierten Zustand hineinragt.

14. Systemanordnung nach einem der Ansprüche 1 bis 13,
**dadurch gekennzeichnet, dass** die Rahmenöffnungen in zueinander senkrechten Reihen und Spalten in dem Systemträger (16) angeordnet sind.

15. Systemanordnung nach einem der Ansprüche 1 bis 14,
**dadurch gekennzeichnet, dass** die Kodierausnehmungen (26) und die Kodierfortsätze (24) an jedem Systemmodul (1) und jeder Rahmenöffnung (28) an derselben Stelle angeordnet sind.

16. Systemanordnung nach einem der Ansprüche 1 bis 15,
**dadurch gekennzeichnet, dass** der Systemträger (16) an einer Seite seines Systemrahmens (27) einen Verschlussriegel (40) aufweist, der mit einem Verschlussgegenstück (45) in einem Aufnahmegehäuse (19) für den Systemträger (16) derart durch Verschiebung zusammenwirkt, dass in einer Verschlussstellung eine Formschlussverbindung gegeben ist.

## Claims

1. System arrangement comprising a system support-piece (16) and several system modules (1) for electrical installations and door communication systems of buildings, the system modules (1) consisting of a module bottom part (2) and a functional top part (3) releasably connected thereto, the module bottom part (2) allowing fastening to the system support-piece (16), the module bottom part (2) having a square-shaped base part (4) inside which a circuit board (6) with its electronic circuit is housed, the circuit board (6) on one side having two multiple contacts (7, 8) for connection of a bus cable (9) and the multiple contacts (7, 8) being electrically assigned in such a way that they form both input contact points as well as output contact points for electrical signal processing and a voltage supply, and the multiple contacts (7, 8) being accessible via openings (11) in the base part (4),
**characterized in that** a projecting base extension (17) of the base part (4) has a square shape and its base area is dimensioned in such a way that it may be subdivided into sixteen equal-size square partial areas, the side edge area of each partial area corresponding to a module-specific grid dimension and the system support-piece (16) consisting of a system frame (27) in which several, square, equal-size frame openings (28) are formed in sequence, the centre-to-centre distance of which openings corresponds to six times the grid dimension and the side length of which corresponds to four times the grid dimension, the system support-piece (16) having a circumferential edge portion on each frame opening (28) acting as contact region.

2. System arrangement according to Claim 1,
**characterized in that** the openings (11) are arranged within cable ducts (12) for receiving the bus cables (9), which ducts intersect each other at right angles, and the multiple contacts (7, 8) are preferably formed as series contacts and are oriented perpendicularly with respect to the central longitudinal axis (X-X) of the cable ducts (12) .

3. System arrangement according to Claim 1 or 2,
**characterized in that** at least one of the guide ducts (12) has a depth which corresponds to twice the thickness of the bus cable (9) formed as a ribbon cable.

4. System arrangement according to one of Claims 1 to 3,
**characterized in that** the base part (4) has, formed in its edge region, a surrounding contact surface (14) for the system support-piece (16).

5. System arrangement according to one of Claims 1 to 4,
**characterized in that** the cable ducts (12) are formed in a base extension (17) projecting in a step-like manner with respect to the edge region forming the contact surface (14).

6. System arrangement according to Claim 5,
**characterized in that** the step height of the base extension (17) is greater than/the same as a material thickness of the system support-piece (16) adjoining the contact surface (14).

7. System arrangement according to one of Claims 1 to 6,
**characterized in that** the side edge length of the partial areas or the grid dimension is equal to 17.75 mm.

8. System arrangement according to one of Claims 1 to 7,
**characterized in that** the width (B) of the contact surface (14) corresponds to at least half the grid dimension, in particular 8.875 mm.

9. System arrangement according to one of Claims 1 to 8,
**characterized in that** the module bottom part (2) has a frame portion (18) along the circumference which projects with respect to the square-shaped base part (4) on all the sides by a uniform projecting distance (C).

10. System arrangement according to Claim 9,
**characterized in that** the sum of the projecting distance (C) and the width (B) of the edge region or contact surface (14) corresponds to the grid dimension, in particular 17.75 mm.

11. System arrangement according to one of Claims 2 to 10,
**characterized in that** the multiple contacts (7, 8) formed as series contacts are arranged, as regards their electrical assignment, in a 90° rotationally symmetrical manner relative to each other.

12. System arrangement according to one of Claims 1 to 11,
**characterized in that** the base extension (17) has fixing sliders (23) mounted pivotably in its corner regions in such a way that in their open position they lie within an external contour of the base extension (17) and in their fixing position they protrude with one end beyond the external contour of the base extension (17).

13. System arrangement according to one of Claims 1 to 12,
**characterized in that** a coding lug (24) is formed on a given side edge of the base extension (17), projecting with respect thereto, and in the assembled condition projects into a coding recess (26) in the system support-piece (16).

14. System arrangement according to one of Claims 1 to 13,
**characterized in that** the frame openings are arranged in the system support-piece (16) in rows and columns which are perpendicular to each other.

15. System arrangement according to one of Claims 1 tor 14,
**characterized in that** the coding recesses (26) and the coding extensions (24) are arranged on each system module (1) and each frame opening (28) in the same position.

16. System arrangement according to one of Claims 1 to 15,
**characterized in that** the system support-piece (16) has on one side of its system frame (27) a locking latch (40) which cooperates by means of displacement with a locking counter-piece (45) in a housing (19) for the system support-piece (16) in such a way that a form-locking connection is provided in a locking position.

## Revendications

1. Ensemble de système constitué d'un support de système (16) et de plusieurs modules de système (1) pour l'installation électrique de bâtiment et la communication de porte, dans lequel les modules sont constitués d'une partie inférieure de module (2) et d'une partie supérieure fonctionnelle (3) reliée à cette dernière de manière amovible, dans lequel la partie inférieure de module (2) sert à la fixation au niveau d'un support de système (16), dans lequel la partie inférieure de module (2) présente une partie de fond (4) de forme carrée, dans laquelle un support de circuit (6) pourvu de son circuit électronique est logé, dans lequel le support de circuit (6) présente d'un côté deux contacts multiples (7, 8) pour un raccordement d'une ligne de bus (9) et dans lequel les contacts multiples (7, 8) sont chargés électriquement de telle manière qu'ils forment aussi bien des points de contact d'entrée que des points de contact de sortie pour un traitement électrique de signal et pour une alimentation en tension, et dans lequel les contacts multiples (7, 8) sont accessibles par l'intermédiaire d'ouvertures (11) dans la partie de fond (4),
**caractérisé en ce qu'**un appendice de fond (17) faisant saillie de la partie de fond (4) présente une forme carrée et **en ce que** sa surface de fond présente des dimensions telles qu'elle peut être divisée en seize faces partielles carrées de même dimension, dans lequel la face d'arête latérale de chaque face partielle correspond à une cote modulaire spécifique au module et le support de système (16) est constitué d'un cadre de système (27), dans lequel plusieurs ouvertures de cadre (28) carrées de même dimension sont réalisées de manière alignée, dont la distance au centre correspond à six fois la cote modulaire et donc la longueur latérale correspond à quatre fois la cote modulaire, dans lequel le support de système (16) présente, en tant que zone d'appui, une section de bord périphérique au niveau de chaque ouverture de cadre (28).

2. Ensemble de système selon la revendication 1,
**caractérisé en ce que** les ouvertures (11) sont disposées à l'intérieur de canaux de ligne (12) se croisant à angle droit, servant à recevoir les lignes de bus (9), et **en ce que** les contacts multiples (7, 8) sont réalisés de préférence sous la forme de contacts en série et sont orientés de manière perpendiculaire à l'axe longitudinal (X-X) central des canaux de ligne (12).

3. Ensemble de système selon la revendication 1 ou 2,
**caractérisé en ce qu'**au moins un des canaux de ligne (12) présente une profondeur qui correspond à une épaisseur égale à deux fois l'épaisseur de la ligne de bus (9) réalisée sous la forme d'un fil plat pour installations intérieures.

4. Ensemble de système selon l'une quelconque des revendications 1 à 3,
**caractérisé en ce que** la partie de fond (4) présente une face d'appui (14) périphérique réalisée au niveau de sa zone de bord pour le support de système (16) .

5. Ensemble de système selon l'une quelconque des revendications 1 à 4,
**caractérisé en ce que** les canaux de ligne (12) sont réalisés dans un appendice de fond (17) faisant saillie par rapport à la zone de bord formant la surface d'appui (14) en formant un palier.

6. Ensemble de système selon la revendication 5,
**caractérisé en ce que** la hauteur de palier de l'appendice de fond (17) est plus grande/égale à une épaisseur de matériau du support de système (16) reposant au niveau de la surface d'appui (14).

7. Ensemble de système selon l'une quelconque des revendications 1 à 6,
**caractérisé en ce que** la longueur d'arête latérale des faces partielles ou la cote modulaire est égale à 17, 75 mm.

8. Ensemble de système selon l'une quelconque des revendications 1 à 7,
**caractérisé en ce que** la largeur (B) de la face d'appui (14) correspond au moins à la moitié de la cote dimensionnelle, est égale en particulier à 8,875 mm.

9. Ensemble de système selon l'une quelconque des revendications 1 à 8,
**caractérisé en ce que** la partie inférieure de module (2) présente une section de cadre (18) périphérique, qui dépasse de toutes parts d'une cote de dépassement (C) unique par rapport à la partie de fond (4) de forme carrée.

10. Ensemble de système selon la revendication 9,
**caractérisé en ce que** la somme de la cote de dépassement (C) et de la largeur (B) de la zone de bord ou de la face d'appui (14) correspond à la cote modulaire, en particulier à 17,75 mm.

11. Ensemble de système selon l'une quelconque des revendications 2 à 10,
**caractérisé en ce que** les contacts multiples (7, 8) réalisés sous la forme de contacts en série sont disposés par rapport à leur charge électrique les uns par rapport aux autres de manière symétrique en rotation selon un angle de 90°.

12. Ensemble de système selon l'une quelconque des revendications 1 à 11,
**caractérisé en ce que** l'appendice de fond (17) présente dans ses zones d'angle des coulisseaux de fixation (23) montés de manière à pouvoir pivoter de telle sorte qu'ils se trouvent dans leur position d'ouverture à l'intérieur d'un contour de l'appendice de fond (17) et dépassent au niveau d'une extrémité, dans leur position de fixation, le contour de l'appendice de fond (17).

13. Ensemble de système selon l'une quelconque des revendications 1 à 12,
**caractérisé en ce qu'**un appendice de codage (24) faisant saillie par rapport à l'appendice de fond (17) est réalisé au niveau d'une arête latérale spécifiée de ce dernier, lequel appendice de codage dépasse à l'intérieur d'un évidement de codage (26) dans le support de système (16) dans l'état monté.

14. Ensemble de système selon l'une quelconque des revendications 1 à 13,
**caractérisé en ce que** les ouvertures de cadre sont disposées dans le support de système (16) dans des rangées et colonnes perpendiculaires les unes par rapport aux autres.

15. Ensemble de système selon l'une quelconque des revendications 1 à 14,
**caractérisé en ce que** les évidements de codage (26) et les prolongements de codage (24) sont disposés au niveau de chaque module de système (1) et au niveau de chaque ouverture de cadre (28) au même emplacement.

16. Ensemble de système selon l'une quelconque des revendications 1 à 15,
**caractérisé en ce que** le support de système (16) présente, au niveau d'un côté de son cadre de système (27), un verrou de fermeture (40), qui coopère avec une pièce complémentaire de fermeture (45) dans un boîtier de logement (19) pour le support de système (16) par déplacement par coulissement de telle manière qu'un assemblage par complémentarité de forme est obtenu dans une position de fermeture.
